# FASCICULE DE BREVET EUROPEEN

(11) **EP 4 069 534 B1**
(45) Date de publication et mention de la délivrance du brevet: **17.01.2024**
(21) Numéro de dépôt: 20828031.3
(22) Date de dépôt: 02.12.2020
(51) Int. Cl.: B60H 1/00, B60H 1/32

(54) **PROCÉDÉ DE RÉGULATION D'UN CIRCUIT DE FLUIDE RÉFRIGERANT**
VERFAHREN ZUM STEUERN EINES KÄLTEMITTELKREISLAUFS
METHOD FOR CONTROLLING A REFRIGERANT FLUID CIRCUIT

(30) Priorité: 05.12.2019 FR 1913827
(43) Date de publication de la demande: 12.10.2022
(73) Titulaire: VALEO SYSTEMES THERMIQUES, 78320 Le Mesnil Saint-Denis (FR)
(72) Inventeur: NICOLAS, Bertrand, 78320 Le Mesnil Saint-Denis (FR); YAHIA, Mohamed, 78320 Le Mesnil Saint-Denis (FR)
(74) Mandataire: Valeo Systèmes Thermiques
(86) Numéro de dépôt international: PCT/FR2020/052251
(87) Numéro de publication internationale: WO 2021/111077

(56) Documents cités:
- WO-A1-2019/122713
- FR-A1- 3 077 335
- FR-A1- 3 081 123

## Description

Le domaine de la présente invention est celui des circuits de fluide réfrigérant pour véhicule, notamment pour véhicule automobile. La présente invention traite particulièrement des procédés assurant la régulation de tels circuits de fluide réfrigérant.

Les véhicules automobiles sont couramment équipés d'un circuit de fluide réfrigérant utilisé pour chauffer ou refroidir différentes zones ou différents composants du véhicule. Il est notamment connu d'utiliser ce circuit de fluide réfrigérant pour traiter thermiquement un flux d'air envoyé dans l'habitacle du véhicule équipé d'un tel circuit.

Dans une autre application de ce circuit, il est connu de l'utiliser pour refroidir un dispositif de stockage électrique du véhicule, ce dernier étant utilisé pour fournir une énergie à un moteur électrique capable de mettre en mouvement le véhicule. Le circuit de fluide réfrigérant fournit ainsi l'énergie capable de refroidir le dispositif de stockage électrique pendant son utilisation en phases de roulage. Le circuit de fluide réfrigérant est ainsi notamment dimensionné pour refroidir ce dispositif de stockage électrique pour des températures qui restent modérées.

Il est également connu de charger le dispositif de stockage électrique du véhicule en le raccordant pendant plusieurs heures au réseau électrique domestique. Cette technique de charge longue permet de maintenir la température du dispositif de stockage électrique en dessous d'un certain seuil, ce qui permet de se passer de tout système de refroidissement du dispositif de stockage électrique.

Une nouvelle technique de charge a fait son apparition récemment. Elle consiste à charger le dispositif de stockage électrique sous une tension et un ampérage élevés, de manière à charger le dispositif de stockage électrique en un temps maximum de quelques dizaines de minutes. Cette charge rapide implique un échauffement du dispositif de stockage électrique qu'il convient de traiter. Par ailleurs, il faut considérer la possibilité que les occupants du véhicule restent à l'intérieur du véhicule tout ou partie du temps de charge mentionné ci-dessus. Il faut alors également traiter thermiquement l'habitacle pendant cette charge rapide pour maintenir des conditions de confort acceptables par les occupants, notamment quand la température extérieure au véhicule dépasse 30°C. Ces deux demandes en refroidissement impliquent un dimensionnement du système qui le rend peu compatible avec les contraintes des véhicules automobiles actuels, notamment les véhicules mus par un moteur électrique.

Le problème technique réside donc dans la capacité d'une part à dissiper les calories générées par le dispositif de stockage électrique, et d'autre part à refroidir l'habitacle, tant en limitant la consommation et/ou l'encombrement et/ou les nuisances sonores d'un système capable de remplir simultanément ces deux fonctions. A ce titre il est connu d'utiliser un circuit de fluide réfrigérant assurant le refroidissement à la fois du dispositif de stockage électrique et de l'habitacle du véhicule, utilisant notamment deux dispositifs de compression agissant sur le fluide réfrigérant, la circulation de ce dernier étant répartie entre lesdits dispositifs de compression afin que ces derniers ne créent pas de nuisances sonores de par une activité élevée. Un tel procédé de régulation d'un système de traitement thermique est connu du document WO 2019/122713 A1. Il convient toutefois de faire en sorte que les dispositifs de compression assurent leur fonction à volume sonore équivalent l'un par rapport à l'autre.

La présente invention propose de résoudre ces diverses contraintes en proposant un procédé de régulation d'un circuit de fluide réfrigérant pour véhicule automobile comprenant au moins une première branche et une deuxième branche, la première branche étant pourvue d'un premier échangeur thermique configuré pour traiter thermiquement un dispositif de stockage électrique du véhicule et d'un premier dispositif de compression associé à la première branche, la deuxième branche étant pourvue d'un deuxième échangeur thermique configuré pour traiter thermiquement un habitacle du véhicule et d'un deuxième dispositif de compression associé à la deuxième branche, lesdits dispositifs de compression étant aptes à tourner à vitesses variables afin de répondre à un objectif de refroidissement variable des branches, caractérisé en ce qu'au cours dudit procédé,
- à une étape, on augmente la vitesse de rotation d'au moins un dispositif de compression jusqu'à une vitesse de rotation correspondant à un seuil acoustique déterminé tant que l'objectif de refroidissement de la branche auquel est associé le dispositif de compression n'est pas atteint,
- à une autre étape, si l'objectif de refroidissement de la branche auquel est associé le dispositif de compression n'est pas atteint lorsque la vitesse de rotation du dispositif de compression atteint la vitesse de rotation correspondant au seuil acoustique déterminé, on fait converger la vitesse de rotation des dispositifs de compression de sorte à ce que cette vitesse soit identique à +/- 10% près.

La première branche et la deuxième branche du circuit de fluide réfrigérant sont configurées pour gérer respectivement la température du dispositif de stockage électrique et la température de l'habitacle du véhicule. La température du dispositif de stockage électrique et/ou de l'habitacle du véhicule à atteindre dépendent donc d'un objectif de refroidissement respectivement de la première branche et/ou de la deuxième branche du circuit de fluide réfrigérant. Par objectif de refroidissement de l'une ou l'autre des branches il faut comprendre que cela correspond à l'atteinte de la température demandée dans un laps de temps déterminé au niveau du dispositif de stockage électrique pour la première branche, et/ou dans l'habitacle du véhicule pour la deuxième branche. A ce titre, le circuit de fluide réfrigérant est apte à agir sur la première branche et/ou la deuxième branche afin de refroidir le dispositif de stockage électrique et/ou l'habitacle du véhicule.

Le refroidissement de la première branche et/ou de la deuxième branche dépend au moins partiellement de la vitesse de rotation respectivement du premier dispositif de compression et du deuxième dispositif de compression. Ainsi, afin de répondre à l'objectif de refroidissement de la branche auquel chacun des dispositifs de compression est associé, ces derniers tournent selon une vitesse de rotation donnée. Tant que l'objectif de refroidissement n'est pas atteint, le dispositif de compression tourne selon une vitesse de rotation de plus en plus élevée, et ce afin de compresser une plus grande quantité de fluide réfrigérant au sein de la branche auquel le dispositif de compression en rotation est associé.

Le dispositif de compression peut tourner jusqu'à la vitesse de rotation correspondant au seuil acoustique déterminé. Le seuil acoustique a été déterminé comme étant une limite sonore du dispositif de compression avant que ce dernier ne génère une nuisance acoustique au sein ou autour du véhicule. Autrement dit, bien que le dispositif de compression soit capable de tourner selon une vitesse de rotation supérieure à la vitesse de rotation correspondant au seuil acoustique déterminé, le procédé de contrôle du circuit de fluide réfrigérant limite volontairement cette vitesse de rotation du dispositif de compression afin que ce dernier ne produise pas de nuisance sonore.

Il est cependant possible que, malgré la vitesse de rotation du dispositif de compression correspondant au seuil acoustique déterminé, la branche auquel le dispositif de compression est associé n'atteint pas l'objectif de refroidissement. Afin d'atteindre ce dernier, et ce sans que la vitesse de rotation du dispositif de compression soit supérieure à la vitesse de rotation correspondant au seuil acoustique déterminé, le procédé de régulation va faire en sorte que la vitesse de rotation des dispositifs de compression convergent l'une par rapport à l'autre afin d'être identique entre elles, ou sensiblement identique à plus ou moins 10% l'une par rapport à l'autre. Autrement dit, la vitesse de rotation du dispositif de compression jusqu'alors non concerné par le déroulé du procédé, va augmenter afin de permettre la compression d'une plus grande quantité de fluide réfrigérant. L'apport dudit dispositif de compression en termes de compression de fluide réfrigérant assure alors l'accomplissement de l'objectif de refroidissement de la branche concernée. Le fait que les dispositifs de compression tournent à la même vitesse de rotation permet d'équilibrer le volume sonore d'un dispositif de compression par rapport à l'autre, sans dépasser le seuil acoustique et tout en assurant le refroidissement requis du dispositif de stockage électrique et/ou de l'habitacle.

Un tel procédé permet donc de limiter les nuisances acoustiques, en faisant fonctionner deux dispositifs de compression à des vitesses inférieures à un seuil acoustique acceptable, ce qui ne serait pas le cas avec un unique dispositif de compression qui imposerait alors une vitesse de rotation très élevée, et par conséquent une nuisance acoustique pour les occupants restés dans le véhicule.

Le circuit de fluide réfrigérant est un circuit fermé. Le circuit de fluide réfrigérant peut par exemple comprendre une branche principale du circuit qui s'étend jusqu'à un point de divergence où le circuit se scinde en deux, en formant la première branche et la deuxième branche, disposées en parallèle l'une par rapport à l'autre. La première branche et la deuxième branche s'étendent jusqu'à un point de convergence liant ces dernières, afin de reformer la branche principale. La branche principale comprend un échangeur de chaleur principal pouvant être installé en face avant du véhicule. Cet échangeur de chaleur principal peut ainsi être utilisé comme condenseur ou comme évaporateur. Le fluide réfrigérant est par exemple un fluide sous-critique, tel que celui connu sous la référence R134A ou 1234YF. Alternativement, le fluide peut être un fluide naturel, tel que le dioxyde de carbone dont la référence est R744.

La première branche, plus particulièrement le premier échangeur thermique, est configuré pour traiter thermiquement un dispositif de stockage électrique du véhicule. Il est ainsi spécialement dédié à ce dispositif de stockage électrique et, dans un mode particulier, n'a pas pour fonction de refroidir un autre composant. Le premier échangeur thermique échange des calories entre le fluide réfrigérant et le dispositif de stockage électrique du véhicule, soit directement, c'est-à-dire par convection ou conduction thermique entre le premier échangeur et le dispositif de stockage électrique, soit indirectement via une boucle de fluide caloporteur, cette dernière étant destinée à transporter les calories du dispositif de stockage électrique vers le premier échangeur thermique. On comprend donc que le refroidissement du dispositif de stockage électrique peut être indirect. De manière alternative, le premier échangeur thermique peut être au contact du dispositif de stockage électrique. Dans un tel cas, le refroidissement du dispositif de stockage électrique est direct.

La deuxième branche, plus particulièrement le deuxième échangeur thermique est configuré pour être traversé par un flux d'air intérieur envoyé dans l'habitacle du véhicule automobile. A ce titre, le deuxième échangeur thermique peut être intégré au sein d'un système externe, par exemple un système de ventilation, de chauffage et/ou de climatisation.

Les dispositifs de compression sont disposés sur la première branche et la deuxième branche, à raison d'un dispositif de compression par branche. Chacun des dispositifs de compression est disposé en aval des échangeurs thermiques par rapport à un sens de circulation du fluide réfrigérant dans la branche concernée. Les dispositifs de compression sont par exemple des compresseurs électriques, par exemple à cylindrée fixe et à vitesse variable. Il est ainsi possible de contrôler la puissance thermique du circuit de fluide réfrigérant. Chacun des dispositifs de compression est indépendant l'un par rapport à l'autre en ce sens que l'un des dispositifs de compression peut être actif alors que l'autre dispositif de compression est inactif, ou encore simultanément tourner à des vitesses de rotation différentes.

Selon une caractéristique du procédé, on détermine au cours du procédé si l'objectif de refroidissement de la branche auquel est associé le dispositif de compression est atteint en comparant une capacité frigorifique de la branche avec ledit objectif de refroidissement de la branche auquel est associé le dispositif de compression. Lorsque le premier et/ou le deuxième dispositif de compression tourne selon une vitesse de rotation donnée, il en résulte une capacité frigorifique notamment due à la quantité de fluide réfrigérant compressée par lesdits dispositifs de compression. La capacité frigorifique de la branche dépend donc au moins partiellement, en particulier essentiellement, de la vitesse de rotation du dispositif de compression associé à ladite branche. Autrement dit, la capacité frigorifique de la branche et la vitesse de rotation du dispositif de compression associé à la branche sont proportionnelles entre elles. Ainsi, plus la vitesse de rotation du dispositif de compression est élevée, plus la capacité frigorifique de la branche incluant le dispositif de compression est élevée. Au cours du procédé, la capacité frigorifique de la branche est comparée à l'objectif de refroidissement de cette même branche auquel est associé le dispositif de compression. Lorsque la capacité frigorifique est supérieure ou égale à l'objectif de refroidissement, le procédé est stoppé car l'objectif de refroidissement est atteint. Tant que la capacité frigorifique est inférieure à l'objectif de refroidissement, ce dernier n'est pas atteint. La vitesse de rotation du dispositif de compression augmente donc selon le déroulé du procédé, puis les vitesses de rotation des dispositifs de compression convergent entre elles si la capacité frigorifique est toujours inférieure à l'objectif de refroidissement au moment où le dispositif de compression associé à la branche atteint la vitesse de rotation correspondant au seuil acoustique déterminé.

Selon une caractéristique du procédé, la vitesse de rotation correspondant au seuil acoustique déterminé d'un ou des dispositifs de compression est inférieure à une vitesse de rotation maximale d'un ou des dispositifs de compression. La vitesse de rotation maximale des dispositifs de compression permet de générer une capacité frigorifique élevée dans la branche comprenant ledit dispositif de compression, mais le volume sonore qui en résulte est considéré comme inacceptable. Aussi, au cours du procédé selon l'invention, les dispositifs de compression n'atteignent pas cette vitesse de rotation maximale, lesdits dispositifs de compression étant capés à la vitesse de rotation correspondant au seuil acoustique déterminé. A titre d'exemple, la vitesse de rotation maximale peut être de 9000 tours par minute, tandis que la vitesse de rotation correspondant au seuil acoustique déterminé peut être de 5000 tours par minute. Il est à noter que chacun des dispositifs de compression présente sa propre vitesse de rotation maximale et sa propre vitesse de rotation correspondant au seuil acoustique déterminé. De telles vitesses peuvent par exemple dépendre du modèle de dispositif de compression utilisé. Dans l'hypothèse où les dispositifs de compression du circuit de fluide réfrigérant sont identiques, la vitesse de rotation maximale et la vitesse de rotation correspondant au seuil acoustique déterminé sont identiques ou sensiblement identiques entre elles.

Selon une caractéristique du procédé, le circuit de fluide réfrigérant est apte à faire circuler le fluide réfrigérant de la première branche à la deuxième branche, le circuit de fluide réfrigérant comprenant une conduite effectuant une liaison entre la première branche et la deuxième branche, ladite conduite étant pourvue d'un moyen de contrôle apte à réguler un passage du fluide réfrigérant d'une branche à l'autre. De manière avantageuse, au moins une conduite relie une portion de la première branche située entre le premier échangeur thermique et le premier dispositif de compression à une portion de la deuxième branche située entre le deuxième échangeur thermique et le deuxième dispositif de compression. Une telle conduite permet la circulation du fluide réfrigérant d'une branche à l'autre. La conduite comprend au moins un moyen de contrôle de la circulation du fluide réfrigérant au sein de la conduite permettant la régulation du débit de fluide réfrigérant circulant dans ladite conduite. La conduite et le moyen de contrôle sont donc aptes à répartir le fluide réfrigérant entre chaque branche en fonction de la vitesse de rotation des dispositifs de compression.

Selon une caractéristique du procédé, le moyen de contrôle autorise une circulation du fluide réfrigérant dans la conduite lorsque le premier dispositif de compression atteint la vitesse de rotation correspondant au seuil acoustique déterminé sans avoir répondu à un premier objectif de refroidissement de la première branche, et que le deuxième dispositif de compression est inactif ou tourne à une vitesse inférieure à la vitesse de rotation correspondant au seuil acoustique déterminé. Dans le cas où la capacité frigorifique générée par la première branche lorsque le premier dispositif de compression atteint la vitesse de rotation correspondant au seuil acoustique déterminé est encore inférieure à l'objectif de refroidissement de la première branche, le deuxième dispositif de compression va également tourner afin de compresser du fluide réfrigérant également. Afin de pouvoir répondre à cette demande, la deuxième branche comprenant le deuxième dispositif de compression doit recevoir du fluide réfrigérant. Ceci est réalisé grâce à la conduite liant les deux branches, ainsi qu'au moyen de contrôle qui est apte à s'ouvrir afin que le fluide réfrigérant sortant du premier échangeur thermique puisse circuler de la première branche vers la deuxième branche. Ainsi, les deux dispositifs de compression sont alimentés en fluide réfrigérant, augmentant la quantité de fluide réfrigérant compressée comparé à un cas de figure où seul un dispositif de compression est actif. La situation est également valable lorsque c'est le deuxième dispositif de compression qui atteint la vitesse de rotation correspondant au seuil acoustique déterminé sans avoir répondu à l'objectif de refroidissement de la deuxième branche, comme par exemple lors d'un refroidissement accéléré de l'habitacle après des conditions sévères de chambrage. Ainsi le premier dispositif de compression va assister le deuxième dispositif de compression et la première branche peut recevoir un apport en fluide réfrigérant par exemple par le biais d'une canalisation.

Selon une caractéristique du procédé, le premier dispositif de compression et le deuxième dispositif de compression convergent à une vitesse de rotation inférieure à la vitesse de rotation correspondant au seuil acoustique déterminé, une première vitesse de rotation du premier dispositif de compression étant réduite tandis qu'une deuxième vitesse de rotation du deuxième dispositif de compression est augmentée.

Selon une caractéristique du procédé, une somme des vitesses de rotation de chacun des dispositifs de compression après convergence des vitesses de rotation est supérieure à la vitesse de rotation correspondant au seuil acoustique déterminé. Lorsque le premier ou le deuxième dispositif de compression atteint sa vitesse de rotation correspondant à un seuil acoustique déterminé sans avoir répondu à l'objectif de refroidissement de la branche qui lui est propre, cela signifie que la vitesse de rotation dudit dispositif de compression n'est pas suffisante pour générer la capacité frigorifique pouvant répondre à l'objectif de refroidissement. Ainsi, lorsque les vitesses de rotation des deux dispositifs de compression convergent entre elles, la capacité frigorifique de la branche concernée résulte alors des deux dispositifs de compression. L'objectif de refroidissement de la branche n'étant pas atteint avec un unique dispositif de compression associé à ladite branche et tournant à la vitesse de rotation correspondant au seuil acoustique déterminé, l'invention autorise que la somme des deux vitesses de rotation des deux dispositifs de compression soit supérieure à la vitesse de rotation correspondant au seuil acoustique déterminé afin que l'objectif de refroidissement puisse être atteint, tant que chacune des vitesses des dispositifs de compression sont en dessous du seuil acoustique déterminé

Selon une caractéristique du procédé, la vitesse de rotation respective de chaque dispositif de compression, après convergence des vitesses de rotation, est augmentée de manière coordonnée l'une par rapport à l'autre jusqu'à la vitesse de rotation correspondant au seuil acoustique déterminé tant que le premier objectif de refroidissement de la première branche n'est pas atteint. Il est possible que malgré l'apport des deux dispositifs de compression, le premier objectif de refroidissement ne soit toujours pas atteint, bien que la somme des vitesses de rotation des dispositifs de compression soit supérieure à la vitesse de rotation correspondant au seuil acoustique déterminé. Dans cette situation, les vitesses de rotation des dispositifs de compression augmentent toutes deux de manière égale et simultanée, et ce afin de pouvoir répondre au premier objectif de refroidissement tout en conservant une vitesse de rotation égale ou sensiblement égale. Cette augmentation de vitesse de rotation peut se poursuivre jusqu'à ce que les dispositifs de compression atteignent tous deux la vitesse de rotation correspondant au seuil acoustique déterminé.

Selon une caractéristique du procédé, le moyen de contrôle régule la circulation du fluide réfrigérant au sein de la conduite selon une section d'ouverture variable. Autrement dit, le moyen de contrôle est apte à contrôler un débit de fluide réfrigérant circulant à travers la conduite reliant la première branche à la deuxième branche. Il est ainsi possible de réguler le volume de fluide réfrigérant circulant d'une branche à l'autre, et ce en fonction de la vitesse de rotation des dispositifs de compression. La section d'ouverture du moyen de contrôle permet de définir un débit de fluide réfrigérant donné circulant à travers la conduite.

Selon une caractéristique du procédé, la section d'ouverture du moyen de contrôle augmente lorsque le premier dispositif de compression atteint la vitesse de rotation correspondant au seuil acoustique déterminé sans avoir répondu au premier objectif de refroidissement de la première branche, et tant que le deuxième dispositif de compression tourne à une vitesse inférieure à la vitesse de rotation correspondant au seuil acoustique déterminé. Dans une telle situation, le deuxième dispositif de compression vient assister le premier dispositif de compression afin de pouvoir répondre au premier objectif de refroidissement. A ce titre, le moyen de contrôle augmente sa section d'ouverture afin de fournir une plus grande quantité de fluide réfrigérant au deuxième dispositif de compression.

Selon une caractéristique du procédé, un débit de fluide réfrigérant circulant dans la première branche est régulé par un premier organe de détente situé en amont du premier échangeur thermique. Le premier organe de détente peut être un organe de détente à commande électrique. Le premier organe de détente est donc piloté électriquement ou électroniquement. Le premier organe de détente permet de réguler le débit de fluide réfrigérant circulant dans la première branche. Tout comme le moyen de contrôle, le premier organe de détente est à ouverture variable, et est donc apte à réguler le débit de fluide réfrigérant circulant dans la première branche, et donc à travers le premier échangeur thermique ayant pour fonction de refroidir le dispositif de stockage électrique.

Selon une caractéristique du procédé, un débit de fluide réfrigérant circulant dans la deuxième branche est régulé par un deuxième organe de détente du deuxième échangeur thermique. Tout comme pour le premier organe de détente, le deuxième organe de détente peut être un organe de détente à commande électrique et est donc piloté électriquement ou électroniquement. Le deuxième organe de détente permet de réguler le débit de fluide réfrigérant circulant dans la deuxième branche. Le deuxième organe de détente est également à ouverture variable, et est donc apte à réguler la quantité de fluide réfrigérant circulant dans la deuxième branche, et donc à travers le deuxième échangeur thermique ayant pour fonction de refroidir l'habitacle du véhicule.

L'invention couvre également un système de traitement thermique comprenant un circuit de fluide réfrigérant mettant en oeuvre un procédé de régulation tel que décrit précédemment.

Selon une caractéristique de l'invention, le système de traitement thermique comprend un module de commande configuré pour régir la mise en oeuvre du procédé de régulation. Le procédé de régulation du circuit de fluide réfrigérant peut être contrôlé par le module de commande faisant partie du système de traitement thermique. Le module de commande est par exemple apte à recevoir un signal indiquant que le dispositif de stockage électrique du véhicule est à température trop élevée et/ou un signal indiquant que l'habitacle du véhicule nécessite d'être refroidi suite à une commande effectuée par un occupant du véhicule. Le module de commande, afin de répondre aux commandes de ces signaux, contrôle les éléments du circuit de fluide réfrigérant permettant de refroidir le dispositif de stockage électrique et/ou l'habitacle du véhicule. Ainsi, le module de commande peut contrôler la vitesse de rotation des dispositifs de compression, ainsi que l'ouverture du moyen de contrôle de la conduite et des organes de détente des branches.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :

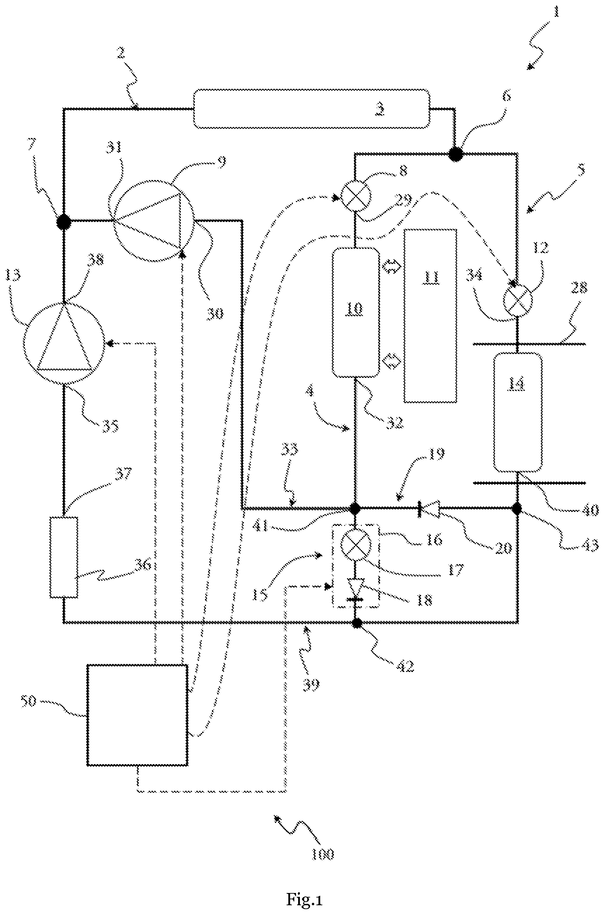

La figure 1 est une représentation schématique d'un circuit de fluide réfrigérant mettant en oeuvre le procédé de régulation selon l'invention,

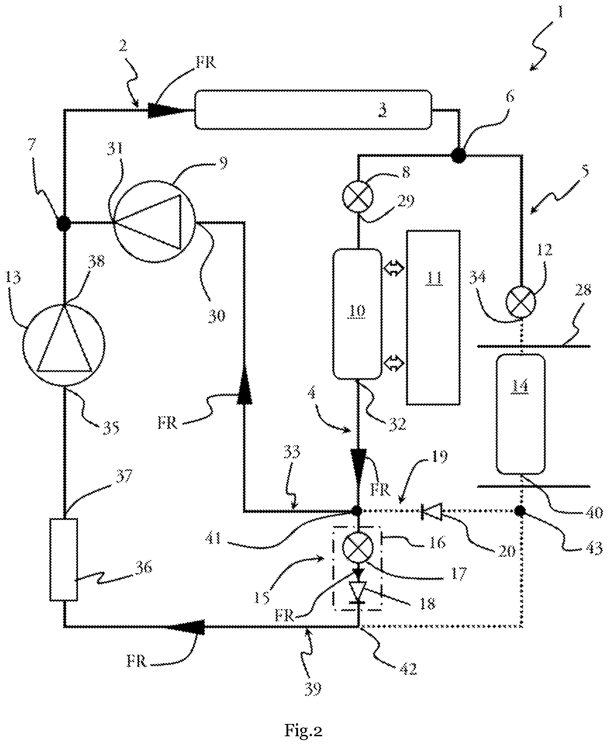

La figure 2 est une représentation schématique de la circulation de fluide réfrigérant au sein du circuit selon un premier exemple où seul un dispositif de stockage électrique nécessite d'être refroidi,

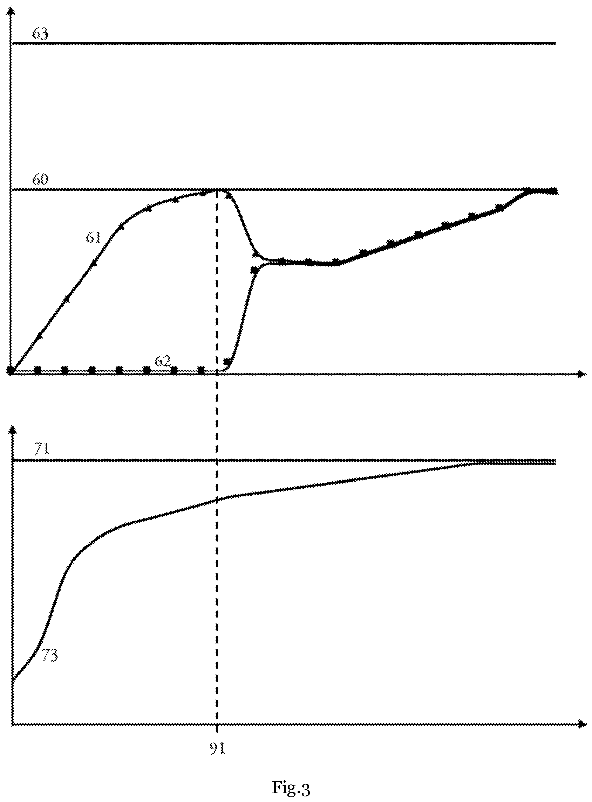

La figure 3 est une courbe de l'évolution d'une vitesse de rotation de dispositifs de compression au cours du temps, et de l'évolution d'une capacité frigorifique dans l'une des branches du circuit de fluide réfrigérant par rapport à un objectif de refroidissement, lesdites courbes étant représentatives du premier exemple présenté précédemment,

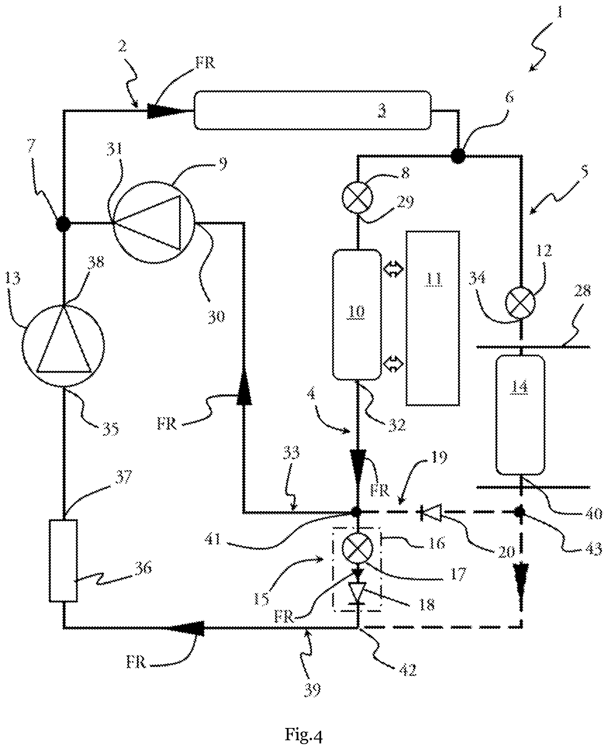

La figure 4 est une représentation schématique de la circulation de fluide réfrigérant au sein du circuit selon un deuxième exemple où le dispositif de stockage électrique et l'habitacle d'un véhicule nécessitent d'être refroidis, la priorité étant le refroidissement du dispositif de stockage électrique,

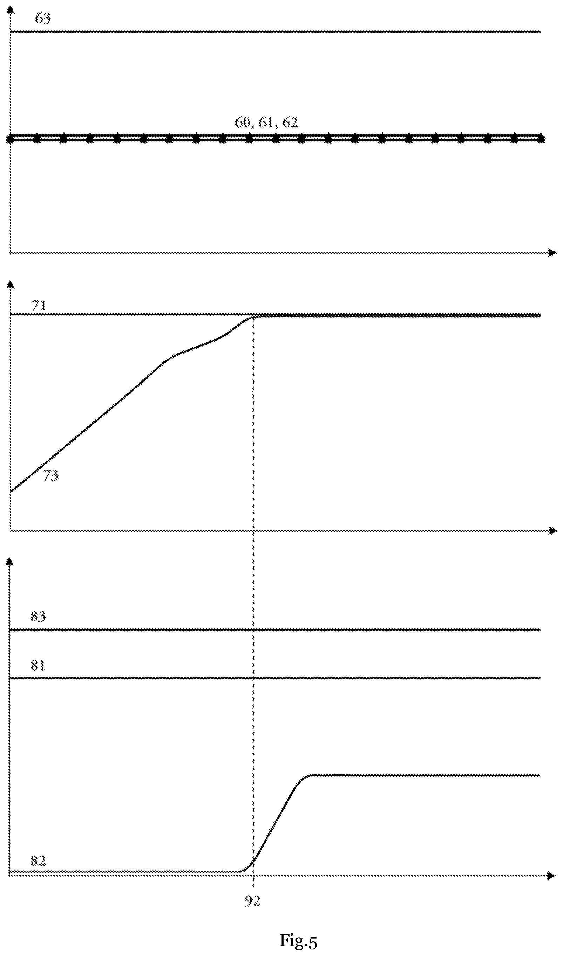

La figure 5 est une courbe de l'évolution de la vitesse de rotation des dispositifs de compression au cours du temps, de l'évolution de la capacité frigorifique d'une première branche du circuit de fluide réfrigérant par rapport à son objectif de refroidissement, et de l'évolution d'une section d'ouverture de deux organes de détente et d'un moyen de contrôle du circuit de fluide réfrigérant, lesdites courbes étant représentatives du deuxième exemple présenté précédemment,

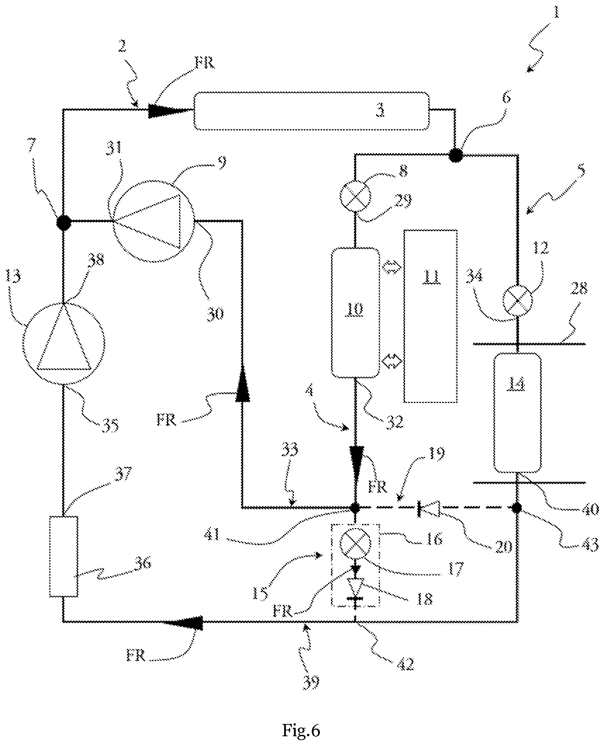

La figure 6 est une représentation schématique de la circulation de fluide réfrigérant au sein du circuit selon un troisième exemple où le dispositif de stockage électrique et l'habitacle du véhicule nécessitent d'être refroidis sans priorité particulière,

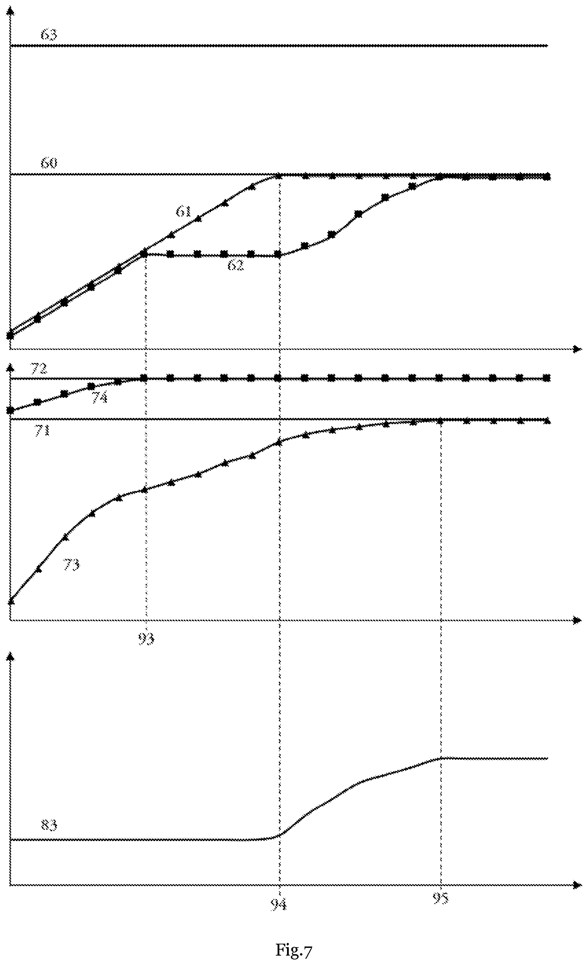

La figure 7 est une courbe de l'évolution de la vitesse de rotation des dispositifs de compression au cours du temps, de l'évolution de la capacité frigorifique des deux branches du circuit de fluide réfrigérant par rapport à leur objectif de refroidissement, et de l'évolution de la section d'ouverture du moyen de contrôle du circuit de fluide réfrigérant, lesdites courbes étant représentatives du troisième exemple présenté précédemment.

Concernant les figures représentant le circuit de fluide réfrigérant, les termes amont et aval employés dans la description qui suit se réfèrent au sens de circulation du fluide considéré, c'est-à-dire le fluide réfrigérant. Le fluide réfrigérant est symbolisé par une flèche qui illustre le sens de circulation de ce dernier dans la canalisation considérée. Les traits pleins illustrent une portion de circuit où le fluide réfrigérant circule, les traits pointillés courts montrent une absence de circulation du fluide réfrigérant, et les traits pointillés longs montrent qu'une circulation du fluide réfrigérant est possible sous certaines conditions qui seront décrites au cours de la description.

La figure 1 montre ainsi un système de traitement thermique 100 comprenant un circuit 1 à l'intérieur duquel un fluide réfrigérant circule. Le circuit 1 comprend une branche principale 2, une première branche 4 et une deuxième branche 5 qui sont en série de la branche principale 2, de sorte à former un circuit fermé où un cycle thermodynamique prend place.

La première branche 4 et la deuxième branche 5 se séparent à un point de divergence 6 et se rejoignent à un point de convergence 7. Entre ces deux points, la première branche 4 et la deuxième branche 5 sont montées en parallèle l'une par rapport à l'autre.

La branche principale 2 s'étend du point de convergence 7 jusqu'au point de divergence 6 et comprend un échangeur de chaleur principal 3. Ce dernier est destiné à être traversé par le fluide réfrigérant et par un flux d'air extérieur. Cet échangeur de chaleur principal 3 est le siège d'un échange de calories entre le fluide réfrigérant et ce flux d'air extérieur. Cet échangeur de chaleur principal 3 peut être installé en face avant du véhicule équipé du circuit 1 selon l'invention et il est dans cette situation traversé par le flux d'air extérieur à l'habitacle du véhicule.

La première branche 4 débute au point de divergence 6 et se termine au point de convergence 7, et comprend successivement et selon le sens de circulation du fluide réfrigérant dans la première branche 4 un premier organe de détente 8, un premier échangeur thermique 10 et un premier dispositif de compression 9 du fluide réfrigérant. Le premier échangeur thermique 10 est ainsi interposé entre une sortie 29 du premier organe de détente 8 et une entrée 30 du premier dispositif de compression 9.

Ce premier échangeur thermique 10 est spécifiquement dédié au traitement thermique d'un dispositif de stockage électrique 11, dont la fonction est de fournir une énergie électrique à un ou plusieurs moteurs électriques qui mettent en mouvement le véhicule. Un tel dispositif de stockage électrique accumule ou restitue cette énergie électrique en vue de mettre en mouvement le véhicule automobile, via le moteur électrique dédié. Il s'agit par exemple d'un pack de batteries regroupant plusieurs cellules électriques qui stockent le courant électrique.

Le premier échangeur thermique 10 échange directement des calories avec le dispositif de stockage électrique 11, par convection ou par conduction. On parle ici de traitement thermique direct du dispositif de stockage électrique 11.

Selon une autre alternative, le premier échangeur thermique 10 est associé thermiquement au dispositif de stockage électrique 11 via une boucle de fluide caloporteur. On parle alors de traitement thermique indirect du dispositif de stockage électrique 11. Le fluide caloporteur capte ainsi les calories au niveau du dispositif de stockage électrique 11 et les transporte vers le premier échangeur thermique 10.

Le premier organe de détente 8 agit sur une puissance thermique mise en oeuvre par le premier échangeur thermique 10, en étant en mesure de faire varier cette puissance thermique de la puissance maximale du premier échangeur de chaleur 10 à toutes puissances thermiques inférieures à cette puissance maximale, notamment en réduisant la section de passage du fluide réfrigérant dans le premier organe de détente 8. Le premier organe de détente 8 est indifféremment un détendeur thermostatique, un détendeur électronisé, un orifice tube ou analogue.

Le premier dispositif de compression 9 comprend son entrée 30 qui est raccordée à une sortie 32 du premier échangeur thermique 10, ainsi qu'une sortie 31 raccordée au point de convergence 7.

La première branche 4 du circuit 1 comprend également une portion 33 qui s'étend entre le premier échangeur thermique 10, plus particulièrement sa sortie 32, et le premier dispositif de compression 9, notamment son entrée 30.

La deuxième branche 5 débute au point de divergence 6 et se termine au point de convergence 7, et comprend successivement et selon le sens de circulation du fluide réfrigérant dans la deuxième branche 5 un deuxième organe de détente 12, un deuxième échangeur thermique 14, un dispositif d'accumulation 36 de fluide réfrigérant et un deuxième dispositif de compression 13 du fluide réfrigérant. Le deuxième échangeur thermique 14 et le dispositif d'accumulation 36 sont ainsi interposés entre une sortie 34 du deuxième organe de détente 12 et une entrée 35 du deuxième dispositif de compression 13, le deuxième échangeur thermique 14 étant disposé en amont du dispositif d'accumulation 36, vu du fluide réfrigérant. Le dispositif d'accumulation 36 peut prendre la forme d'un accumulateur, où la phase liquide contenue dans le fluide réfrigérant s'accumule dans l'accumulateur, et où la phase gazeuse de ce même fluide réfrigérant est aspirée par le deuxième dispositif de compression 13. Alternativement, le dispositif d'accumulation 36 peut être une bouteille déshydratante qui peut avantageusement être intégrée à l'échangeur de chaleur principal 3.

Le deuxième échangeur thermique 10 est destiné à traiter thermiquement un flux d'air intérieur qui est envoyé à l'intérieur de l'habitacle du véhicule. Le deuxième échangeur thermique 14 peut être installé à l'intérieur d'une installation de ventilation, de chauffage et/ou climatisation qui coopère avec le circuit 1, pour former un système de traitement thermique du véhicule automobile. Ce deuxième échangeur thermique 14 peut alors être utilisé en tant qu'évaporateur pour refroidir le flux d'air intérieur qui est envoyé dans l'habitacle du véhicule.

Le deuxième organe de détente 12 agit sur une puissance thermique mise en oeuvre par le deuxième échangeur thermique 14, en étant en mesure de faire varier cette puissance thermique pour plus ou moins refroidir le flux d'air intérieur envoyé dans l'habitacle. Le deuxième organe de détente 12 est indifféremment un détendeur thermostatique, un détendeur électronisé, un orifice tube ou analogue.

Le deuxième dispositif de compression 13 comprend son entrée 35 qui est raccordée à une sortie 37 du dispositif d'accumulation 36, ainsi qu'une sortie 38 raccordée au point de convergence 7.

La deuxième branche 5 du circuit 1 comprend également une portion 39 qui s'étend entre le deuxième échangeur thermique 14, plus particulièrement sa sortie 40, et le deuxième dispositif de compression 13, notamment son entrée 35. Le dispositif d'accumulation 36 peut être disposé dans cette portion 39 de la deuxième branche 5.

Selon un aspect de l'invention, le circuit 1 comprend au moins une conduite 15 qui relie fluidiquement la portion 33 de la première branche 4 à la portion 39 de la deuxième branche 5. Une telle conduite 15 permet de mettre en communication la première branche 4 et la deuxième branche 5, offrant ainsi la possibilité de mutualiser l'utilisation des deux dispositifs de compression 9,13.

La conduite 15 est ainsi raccordée à un premier point 41 situé dans la portion 33 de la première branche 4 et à un deuxième point 42 situé dans la portion 39 de la deuxième branche 5.

La circulation du fluide réfrigérant dans la conduite 15 peut être contrôlée. C'est ainsi que la conduite 15 peut comprendre un moyen de contrôle 16 de la circulation du fluide réfrigérant au sein de la conduite 15. Ce moyen de contrôle 16 peut comprendre ou être constitué par un dispositif de détente 17, dont la fonction est soit de fermer la conduite 15, soit de l'ouvrir au moins partiellement, soit de mettre en oeuvre une perte de charge de manière à générer une détente du fluide réfrigérant.

De manière cumulative, le moyen de contrôle 16 de la circulation du fluide réfrigérant FR au sein de la conduite 15 peut comprendre un premier clapet anti-retour 18. Ce dernier autorise ainsi une circulation du fluide réfrigérant de la portion 33 de la première branche 4 vers la portion 39 de la deuxième branche 5, et interdit une telle circulation en sens inverse, c'est-à-dire depuis la portion 39 de la deuxième branche 5 et vers la portion 33 de la première branche 4.

Le circuit 1 selon l'invention peut également comporter une première canalisation 19 disposée en parallèle de la conduite 15, vu du fluide réfrigérant. La première canalisation 19 s'étend ainsi de la portion 39 de la deuxième branche 5 à la portion 33 de la première branche 4. La première canalisation 19 s'étend entre un troisième point 43 situé dans la portion 39 de la deuxième branche 5 et le premier point 41.

La première canalisation 19 peut comprendre un deuxième clapet anti-retour 20. Ce dernier autorise ainsi une circulation du fluide réfrigérant de la portion 39 de la deuxième branche 5 vers la portion 33 de la première branche 4, et interdit une telle circulation en sens inverse, c'est-à-dire depuis la portion 33 de la première branche 4 et vers la portion 39 de la deuxième branche 5.

Le système de traitement thermique 100 comprend également un module de commande 50 configuré pour agir sur le circuit 1, plus particulièrement sur les dispositifs de compression 9 et 13, sur les organes de détente 8 et 12, ainsi que sur le moyen de contrôle 16. Le module de commande 50 est ainsi apte à modifier la vitesse de rotation des dispositifs de compression 9 et 13. Le module de commande 50 peut également agir sur les organes de détente 8 et 12, plus précisément sur le degré d'ouverture de ces derniers, et ce afin de piloter le débit de fluide réfrigérant circulant respectivement dans la première branche 4 et dans la deuxième branche 5. Enfin, le module de commande 50 peut influer sur la quantité de fluide réfrigérant circulant dans la conduite 15 en régulant l'ouverture du moyen de contrôle 16.

Le module de commande 50 est une unité électronique qui peut faire partie du système de traitement thermique 100 comprenant le circuit 1 objet de l'invention. Certaines étapes du procédé peuvent être mise en oeuvre par le module de commande 50.

L'action du module de commande 50 peut par exemple dépendre de signaux que ce dernier reçoit. Lesdits signaux servent par exemple à indiquer au module de commande 50 que le dispositif de stockage électrique 11 est à une température trop élevée, par exemple suite à un rechargement de celui-ci dans un mode de charge rapide. Les signaux peuvent également indiquer que l'habitacle du véhicule doit être refroidi suite à une demande de l'un des occupants de l'habitacle. En fonction des signaux reçus, le module de commande 50 agit ou non sur un ou plusieurs composants parmi les dispositifs de compression 9, 13, les organes de détente 8, 12 et/ou le moyen de contrôle 16, en particulier le dispositif de détente 17. Les signaux indiquent également un état du dispositif de stockage électrique 11 et/ou de l'habitacle du véhicule que le module de commande 50 analyse de façon à déterminer un objectif de refroidissement respectivement de la première branche 4 et/ou de la deuxième branche 5. Par la suite, différents exemples seront présentés.

La figure 2 illustre le circuit 1 et la circulation du fluide réfrigérant FR au sein de celui-ci selon un premier exemple. Sur la figure 2, seul le dispositif de stockage électrique 11 doit être refroidi. Le fluide réfrigérant FR circule donc au sein de la branche principale 2 et de la première branche 4. L'habitacle du véhicule ne nécessitant pas d'être refroidi, la circulation de fluide réfrigérant FR est interrompue au sein de la deuxième branche 5, plus particulièrement entre le deuxième organe de détente 12 et le premier point 41, et entre le deuxième organe de détente 12 et le deuxième point 42. En particulier, le deuxième organe de détente 12 est fermé. Selon ce premier exemple, le moyen de contrôle 16 est entièrement ouvert. Le fluide réfrigérant FR peut donc circuler entre la première branche 4 et la deuxième branche 5, plus particulièrement entre la portion 33 de la première branche 4 et la portion 39 de la deuxième branche 5.

Dans la mesure où seul le dispositif de stockage électrique 11 nécessite d'être refroidi, c'est le premier dispositif de compression 9 qui est actif ou principalement actif par rapport au deuxième dispositif de compression 13. Les détails concernant la vitesse de rotation de chacun des dispositifs de compression seront évoqués par la suite.

La figure 3 est une courbe de l'évolution d'une vitesse de rotation de dispositifs de compression au cours du temps, et une courbe de l'évolution d'une capacité frigorifique de l'une des branches du circuit de fluide réfrigérant par rapport à un objectif de refroidissement, lesdites courbes étant représentative du premier exemple présenté précédemment. La courbe située en haut de la figure 3 représente l'évolution de la vitesse de rotation des dispositifs de compression en fonction du temps. La vitesse de rotation des dispositifs de compression peut par exemple être mesurée en tours par minute. Les dispositifs de compression sont aptes à tourner selon une vitesse de rotation maximale 63 qui est, par exemple, la même pour les deux dispositifs de compression. La vitesse de rotation maximale 63 peut par exemple correspondre à 9000 tours par minute. Toutefois, au cours du procédé selon l'invention, les dispositifs de compression n'atteignent pas la vitesse de rotation maximale 63, car une telle vitesse de rotation créée des nuisances sonores non souhaitables. Ainsi, les dispositifs de compression sont limités à une vitesse de rotation correspondant à un seuil acoustique déterminé 60. Chacun des dispositifs de compression a sa propre vitesse de rotation correspondant au seuil acoustique déterminé 60, cette dernière pouvant varier par exemple en fonction du modèle de dispositif de compression utilisé. La vitesse de rotation correspondant au seuil acoustique déterminé 60 est, ici en particulier, la même pour les deux dispositifs de compression. Il a été considéré qu'une vitesse de rotation supérieure à la vitesse de rotation correspondant au seuil acoustique déterminé 60 produit des nuisances sonores. Les dispositifs de compression ne tournent donc pas au-delà de la vitesse de rotation correspondant au seuil acoustique déterminé 60, par exemple 5000 tours par minute.

La courbe située en bas de la figure 3 représente l'évolution d'une première capacité frigorifique 73 au cours du temps, devant atteindre un premier objectif de refroidissement 71. La première capacité frigorifique 73 et le premier objectif de refroidissement 71 sont relatifs à la première branche. La première capacité frigorifique 73 et le premier objectif de refroidissement 71 présentent la même unité. Il est par exemple possible de raisonner selon une unité thermodynamique de refroidissement tel que cela est représenté sur la figure 3, ou selon une température en degré Celsius. Le premier objectif de refroidissement 71 est relatif à la première branche, elle-même configurée pour refroidir le dispositif de stockage électrique par le biais du premier échangeur thermique. Le premier objectif de refroidissement 71 doit répondre au besoin en refroidissement du dispositif de stockage électrique, demandé par le module de commande, par exemple après mesure d'une température trop élevée. Dans cette situation, le but de la première branche est donc de produire une première capacité frigorifique 73 atteignant le premier objectif de refroidissement 71.

Afin de répondre au premier objectif de refroidissement 71, le procédé commence par faire tourner le premier dispositif de compression selon une première vitesse de rotation 61. La première capacité frigorifique 73 de la première branche augmente alors et se rapproche petit à petit du premier objectif de refroidissement 71, et ce au fur et à mesure que la première vitesse de rotation 61 du premier dispositif de compression augmente, car la première capacité frigorique 73 de la première branche dépend partiellement de la première vitesse de rotation 61 du premier dispositif de compression.

Dans le même temps, étant donné que l'habitacle du véhicule ne nécessite pas d'être refroidi, le deuxième dispositif de rotation est inactif. Sa vitesse de rotation correspond donc à une deuxième vitesse de rotation 62 nulle.

La première vitesse de rotation 61 augmente au cours du temps jusqu'à un premier instant t 91. Au premier instant t 91, le premier dispositif de compression atteint une première vitesse de rotation 61 équivalente à la vitesse de rotation correspondant au seuil acoustique déterminé 60 et, selon le procédé, ne peut donc pas tourner à une vitesse de rotation plus élevée. Or, on remarque qu'au premier instant t 91 la première capacité frigorifique 73 n'a pas atteint le premier objectif de refroidissement 71.

Afin que la première capacité frigorifique 73 puisse atteindre l'objectif de refroidissement 71 sans que la première vitesse de rotation 61 ne dépasse la vitesse de rotation correspondant au seuil acoustique déterminé 60, le procédé met à contribution le deuxième dispositif de compression qui jusqu'alors était inactif. Les vitesses de rotation des dispositifs de compression vont alors converger entre elles. Ainsi, la première vitesse de rotation 61 diminue tandis que la deuxième vitesse de rotation 62 augmente suite à la mise en fonctionnement du deuxième dispositif de compression. Les dispositifs de compression tournent alors selon une vitesse de rotation identique ou sensiblement identique à +/- 10% l'une par rapport à l'autre. Cette vitesse de rotation peut par exemple être de 3000 tours par minute. Une telle vitesse est inférieure à la vitesse de rotation correspondant au seuil acoustique déterminé 60, mais c'est ici la somme des vitesses de rotation des dispositifs de compression qui est prise en compte, et qui donc permet d'obtenir une vitesse de rotation totale plus élevée qu'avec un seul dispositif de compression tournant selon la vitesse de rotation correspondant au seuil acoustique déterminé 60.

L'association des deux dispositifs de compression tournant selon une vitesse de rotation sensiblement identique l'une par rapport à l'autre permet par la suite à la première capacité frigorifique 73 de répondre aux besoins du premier objectif de refroidissement 71. Le moyen de contrôle étant ouvert, le deuxième dispositif de compression reçoit le fluide réfrigérant grâce au passage de celui-ci à travers la conduite reliant les deux branches et peut donc compresser le fluide réfrigérant tout comme le premier dispositif de compression. Tel que cela est représenté sur la figure 3, la vitesse de rotation des dispositifs de compression peut également augmenter de manière coordonnée l'une par rapport à l'autre, et ce jusqu'à la vitesse de rotation correspondant au seuil acoustique déterminé 60 d'au moins l'un des dispositifs de compression, afin d'assurer l'accomplissement du premier objectif de refroidissement 71.

Le premier exemple présenté au travers des figures 2 et 3 correspond à une situation où seul le dispositif de stockage électrique doit être refroidi, mais un tel exemple est également valable lorsque seul l'habitacle du véhicule nécessite d'être refroidi, le circuit étant apte à faire circuler le fluide réfrigérant à travers la deuxième branche.

La figure 4 illustre le circuit 1 et la circulation du fluide réfrigérant FR au sein de celui-ci selon un deuxième exemple. Sur la figure 4, le dispositif de stockage électrique 11 et l'habitacle du véhicule doivent être refroidi, mais c'est le dispositif de stockage électrique 11 qui doit être refroidi en priorité. Le fluide réfrigérant FR circule donc au sein de la branche principale 3 et de la première branche 4 dans son intégralité. La circulation de fluide réfrigérant FR est interrompu au sein de la deuxième branche 5, plus particulièrement entre le deuxième organe de détente 12 et le premier point 41, et entre le deuxième organe de détente 12 et le deuxième point 42 tant que le dispositif de stockage électrique 11 n'est pas suffisamment refroidi. Selon ce deuxième exemple, le moyen de contrôle 16 est entièrement ouvert. Le fluide réfrigérant FR peut donc circuler entre la première branche 4 et la deuxième branche 5, plus particulièrement entre la portion 33 de la première branche 4 et la portion 39 de la deuxième branche 5. Toujours selon ce deuxième exemple, le premier organe de détente 8 est ouvert afin que le fluide réfrigérant FR puisse circuler au sein de la première branche 4 et ainsi refroidir le dispositif de stockage électrique 11. Le deuxième organe de détente 12 est fermé tant que le dispositif de stockage électrique 11 n'est pas suffisamment refroidi. Une fois cette objectif atteint, le deuxième organe de détente 12 s'ouvre afin d'autoriser la circulation du fluide réfrigérant FR au sein de la deuxième branche 5, et ainsi de permettre le refroidissement de l'habitacle du véhicule. Les dispositifs de compression 9 et 13 tournent selon une vitesse de rotation constante au cours du temps, ladite vitesse de rotation correspondant au seuil acoustique déterminé.

La figure 5 montre une courbe de l'évolution de la vitesse de rotation des dispositifs de compression au cours du temps, une courbe de l'évolution de la capacité frigorifique de la première branche du circuit de fluide réfrigérant par rapport à son objectif de refroidissement, et une courbe de l'évolution d'une section d'ouverture de deux organes de détente et du moyen de contrôle du circuit de fluide réfrigérant, lesdites courbes étant représentatives du deuxième exemple présenté précédemment.

La courbe située en haut de la figure 5 représente la première vitesse de rotation 61 du premier dispositif de compression, et la deuxième vitesse de rotation 62 du deuxième dispositif de compression, par exemple en tours par minute. Selon le deuxième exemple, les dispositifs de compression tournent constamment au cours du temps à la vitesse de rotation correspondant au seuil acoustique déterminé 60 d'au moins l'un des dispositifs de compression.

La courbe centrale de la figure 5 représente l'évolution de la première capacité frigorifique 73 au cours du temps. Tout comme précédemment, la première capacité frigorifique 73 doit atteindre le premier objectif de refroidissement 71 répondant au besoin en refroidissement du dispositif de stockage électrique.

La courbe située en bas de la figure 5 représente l'évolution d'une section d'ouverture des deux organes de détente et du moyen de contrôle, en particulier du dispositif de détente, au cours du temps. Chacune des sections d'ouverture peut par exemple être exprimée en pourcentage, 0% représentant une section totalement fermée et 100% représentant une section totalement ouverte. Selon le deuxième exemple, le premier organe de détente présente une première section d'ouverture 81 au moins partiellement ouverte. Le premier organe de détente autorise la circulation du fluide réfrigérant dans la première branche afin de refroidir le dispositif de stockage électrique. La priorité étant le refroidissement du dispositif de stockage électrique, une deuxième section d'ouverture 82 du deuxième organe de détente est initialement fermée. La deuxième branche ne peut donc pas refroidir l'habitacle du véhicule. Enfin, le moyen de contrôle est également partiellement ouvert selon une troisième section d'ouverture 83, et ce afin que chacun des dispositifs de compression reçoivent du fluide réfrigérant et puissent compresser ce dernier.

Dans cette situation du procédé, les dispositifs de compression tournent initialement selon une vitesse de rotation identique ou sensiblement identique à +/- 10% l'une par rapport à l'autre, ladite vitesse de rotation étant égale ou sensiblement égale à la vitesse de rotation correspondant au seuil acoustique déterminé 60 d'au moins l'un des dispositifs de compression.

Les dispositifs de compression tournent à cette vitesse de rotation afin que la première capacité frigorifique 73 atteigne le premier objectif de refroidissement 71 le plus rapidement possible. Tant que la première capacité frigorifique 73 n'a pas atteint le premier objectif de refroidissement 71, la deuxième section d'ouverture 82 reste fermée afin que seule la première branche soit alimentée en fluide réfrigérant, la priorité étant de refroidir le dispositif de stockage électrique. La première capacité frigorifique 73 atteint le premier objectif de refroidissement 71 à un deuxième instant t 92. A partir de ce deuxième instant t 92, la deuxième section d'ouverture 82 du deuxième organe de détente s'ouvre au moins partiellement, afin de faire circuler le fluide réfrigérant dans la deuxième branche et ainsi assurer le refroidissement de l'habitacle du véhicule par le biais du deuxième échangeur thermique. Dans l'hypothèse où la première branche n'est plus susceptible de suffisamment refroidir le dispositif de stockage électrique dans cette nouvelle configuration, la deuxième section d'ouverture 82 du deuxième organe de détente se referme afin que le fluide réfrigérant circule à nouveau uniquement dans la première branche.

Le deuxième exemple présenté au travers des figures 4 et 5 correspond à une situation où le dispositif de stockage électrique et l'habitacle du véhicule doivent être refroidi, le refroidissement du dispositif de stockage électrique devant être refroidi en priorité, mais un tel exemple est également transposable lorsque c'est l'habitacle du véhicule qui nécessite d'être refroidi en priorité.

La figure 6 est une représentation schématique de la circulation de fluide réfrigérant au sein du circuit selon un troisième exemple où le dispositif de stockage électrique et l'habitacle du véhicule nécessitent d'être refroidis sans priorité particulière. Selon ce troisième exemple, le fluide réfrigérant FR circule au sein de la première branche 4 et de la deuxième branche 5, chacune des branches devant accomplir l'objectif de refroidissement qui lui est propre. A ce titre le premier organe de détente 8 et le deuxième organe de détente 12 sont au moins partiellement ouvert afin que le fluide réfrigérant FR puisse traverser respectivement le premier échangeur thermique 10 pour refroidir le dispositif de stockage électrique 11 et le deuxième échangeur thermique 14 pour refroidir l'habitacle du véhicule. Selon ce troisième exemple, le module de commande agit sur la vitesse de rotation des dispositifs de compression 9 et 13, ainsi que sur la section d'ouverture du moyen de contrôle 16, du premier organe de détente 8 et du deuxième organe de détente 12. Modifier la section d'ouverture du moyen de contrôle 16 permet de répartir le fluide réfrigérant FR entre la première branche 4 et la deuxième branche 5, et ce en fonction de l'activité du premier dispositif de compression 9 et du deuxième dispositif de compression 13.

La figure 7 montre une courbe de l'évolution de la vitesse de rotation des dispositifs de compression au cours du temps, une courbe de l'évolution de la capacité frigorifique des deux branches du circuit de fluide réfrigérant par rapport à leur objectif de refroidissement, et une courbe de l'évolution de la section d'ouverture du moyen de contrôle du circuit de fluide réfrigérant.

La courbe située en haut de la figure 7 permet de suivre l'évolution de la première vitesse de rotation 61 du premier dispositif de compression et de la deuxième vitesse de rotation 62 du deuxième dispositif de compression au cours du temps. La courbe centrale permet de suivre l'évolution de la première capacité frigorifique 73 de la première branche afin d'atteindre le premier objectif de refroidissement 71, ainsi que l'évolution d'une deuxième capacité frigorifique 74 de la deuxième branche afin d'atteindre un deuxième objectif de refroidissement 72, ce dernier répondant à un besoin en refroidissement de l'habitacle du véhicule, par exemple après commande par un occupant du véhicule. La courbe située en bas de la figure 7 présente quant à elle l'évolution de la troisième section d'ouverture 83 du moyen de contrôle, en particulier l'évolution de la section d'ouverture du dispositif de détente.

Dans une telle situation du procédé et afin de répondre respectivement au besoin en refroidissement du dispositif de stockage électrique et de l'habitacle du véhicule, la première vitesse de rotation 61 du premier dispositif de compression et la deuxième vitesse de rotation 62 du deuxième dispositif de compression augmentent. Cela a pour effet d'augmenter la première capacité frigorifique 73 de la première branche ainsi que la deuxième capacité frigorifique 74 de la deuxième branche étant donné que les capacités frigorifiques dépendent partiellement des vitesses de rotation des dispositifs de compression qui leur est associé. Dans le même temps, le moyen de contrôle présente une troisième section d'ouverture 83 quelconque, par exemple ici fermée.

A un troisième instant t 93, la deuxième capacité frigorifique 74 atteint le deuxième objectif de refroidissement 72. Cela signifie que l'habitacle du véhicule est suffisamment refroidi. La deuxième vitesse de rotation 62 du deuxième dispositif de compression stagne alors à partir du troisième instant t 93. Au troisième instant t 93, la première capacité frigorifique 73 n'a en revanche pas atteint le premier objectif de refroidissement 71. Le premier dispositif de compression continue donc d'augmenter sa première vitesse de rotation 61.

Le procédé se poursuit jusqu'à un quatrième instant t 94. Au quatrième instant t 94, la première vitesse de rotation 61 du premier dispositif de compression atteint la vitesse de rotation correspondant au seuil acoustique déterminé 60 d'au moins l'un des dispositifs de compression. Comme cela a été décrit précédemment, la première vitesse de rotation 61 ne peut pas augmenter à ce stade sous peine de générer des nuisances sonores. Or, on constate qu'au quatrième instant t 94, la première capacité frigorifique 73 n'a toujours pas atteint le premier objectif de refroidissement 71. Pour pallier cela, le deuxième dispositif de compression augmente sa deuxième vitesse de rotation 62 afin de participer à l'augmentation de la première capacité frigorifique 73 afin que cette dernière puisse atteindre le premier objectif de refroidissement 71. Tel que cela se déroule lors du procédé, la première vitesse de rotation 61 et la deuxième vitesse de rotation 62 convergent l'une par rapport à l'autre afin d'atteindre toutes deux la vitesse de rotation correspondant au seuil acoustique déterminé 60 d'au moins l'un des dispositifs de compression.

Dans le même temps, la troisième section d'ouverture 83 du moyen de contrôle, en particulier la section d'ouverture du dispositif de détente, s'ouvre progressivement, afin que le fluide réfrigérant puisse circuler au sein de la conduite de la première branche à la deuxième branche, et ainsi que le deuxième dispositif de compression puisse recevoir un fluide réfrigérant suffisant et augmenter sa deuxième vitesse de rotation 62, et ainsi participer au refroidissement de la première branche afin que celle-ci atteigne le premier objectif de refroidissement 71. Une fois le premier objectif de refroidissement 71 atteint par la première capacité frigorifique 73 au cours d'un cinquième instant t 95, la troisième section d'ouverture 83 du moyen de contrôle maintient son ouverture constante.

Bien sûr, l'invention n'est pas limitée aux exemples qui viennent d'être décrits et de nombreux aménagements peuvent être apportés à ces exemples sans sortir du cadre de l'invention, qui est défini par les revendications.

L'invention, telle qu'elle vient d'être décrite, atteint bien le but qu'elle s'était fixée, et permet de proposer un procédé de régulation d'un circuit de fluide réfrigérant impliquant au moins deux dispositifs de compression et permettant de réguler la température de plusieurs entités sans causer de nuisances sonores provenant des dispositifs de compression et en faisant converger la vitesse de rotation de ceux-ci. Des variantes non décrites ici pourraient être mises en oeuvre sans sortir du contexte de l'invention, dès lors que, conformément à l'invention, elles comprennent un procédé de régulation conforme aux revendications.

## Revendications

1. Procédé de régulation d'un circuit (1) de fluide réfrigérant (FR) pour véhicule automobile comprenant au moins une première branche (4) et une deuxième branche (5), la première branche (4) étant pourvue d'un premier échangeur thermique (10) configuré pour traiter thermiquement un dispositif de stockage électrique (11) du véhicule et d'un premier dispositif de compression (9) associé à la première branche (4), la deuxième branche (5) étant pourvue d'un deuxième échangeur thermique (14) configuré pour traiter thermiquement un habitacle du véhicule et d'un deuxième dispositif de compression (13) associé à la deuxième branche (5), lesdits dispositifs de compression (9, 13) étant aptes à tourner à vitesses variables afin de répondre à un objectif de refroidissement (71, 72) variable des branches (4, 5), **caractérisé en ce qu'**au cours dudit procédé,
- à une étape, on augmente la vitesse de rotation (61, 62) d'au moins un dispositif de compression (9, 13) jusqu'à une vitesse de rotation correspondant à un seuil acoustique déterminé (60) tant que l'objectif de refroidissement (71, 72) de la branche (4, 5) auquel est associé le dispositif de compression (9, 13) n'est pas atteint,
- à une autre étape, si l'objectif de refroidissement (71, 72) de la branche (4, 5) auquel est associé le dispositif de compression (9, 13) n'est pas atteint lorsque la vitesse de rotation (61, 62) du dispositif de compression (9, 13) atteint la vitesse de rotation correspondant au seuil acoustique déterminé (60), on fait converger la vitesse de rotation (61, 62) des dispositifs de compression (9, 13) de sorte à ce que cette vitesse soit identique à +/- 10% près.

2. Procédé de régulation selon la revendication 1, au cours duquel on détermine si l'objectif de refroidissement (71, 72) de la branche (4, 5) auquel est associé le dispositif de compression (9, 13) est atteint en comparant une capacité frigorifique (73, 74) de la branche (4, 5) avec ledit objectif de refroidissement (71, 72) de la branche (4, 5) auquel est associé le dispositif de compression (9, 13).

3. Procédé de régulation selon l'une quelconque des revendications précédentes, au cours duquel le circuit (1) de fluide réfrigérant (FR) est apte à faire circuler le fluide réfrigérant (FR) de la première branche (4) à la deuxième branche (5), le circuit (1) de fluide réfrigérant (FR) comprenant une conduite (15) effectuant une liaison entre la première branche (4) et la deuxième branche (5), ladite conduite (15) étant pourvue d'un moyen de contrôle (16) apte à réguler un passage du fluide réfrigérant (FR) d'une branche (4, 5) à l'autre.

4. Procédé de régulation selon la revendication 3, au cours duquel le moyen de contrôle (16) autorise une circulation du fluide réfrigérant (FR) dans la conduite (15) lorsque le premier dispositif de compression (9) atteint la vitesse de rotation correspondant au seuil acoustique déterminé (60) sans avoir répondu à un premier objectif de refroidissement (71) de la première branche (4), et que le deuxième dispositif de compression (13) est inactif ou tourne à une vitesse inférieure à la vitesse de rotation correspondant au seuil acoustique déterminé (60).

5. Procédé de régulation selon la revendication 4, au cours duquel le premier dispositif de compression (9) et le deuxième dispositif de compression (13) convergent à une vitesse de rotation (61, 62) inférieure à la vitesse de rotation correspondant au seuil acoustique déterminé (60), une première vitesse de rotation (61) du premier dispositif de compression (9) étant réduite tandis qu'une deuxième vitesse de rotation (62) du deuxième dispositif de compression (13) est augmentée.

6. Procédé de régulation selon l'une des revendications 4 ou 5, au cours duquel la vitesse de rotation (61, 62) respective de chaque dispositif de compression (9, 13), après convergence des vitesses de rotation (61, 62), est augmentée de manière coordonnée l'une par rapport à l'autre jusqu'à la vitesse de rotation correspondant au seuil acoustique déterminé (60) tant que le premier objectif de refroidissement (71) de la première branche (4) n'est pas atteint.

7. Procédé de régulation selon la revendication 4, au cours duquel le moyen de contrôle (16) régule la circulation du fluide réfrigérant (FR) au sein de la conduite (15) selon une section d'ouverture variable.

8. Procédé de régulation selon la revendication 7, dans lequel la section d'ouverture du moyen de contrôle (16) augmente lorsque le premier dispositif de compression (9) atteint la vitesse de rotation correspondant au seuil acoustique déterminé (60) sans avoir répondu au premier objectif de refroidissement (71) de la première branche (4), et tant que le deuxième dispositif de compression (13) tourne à une vitesse inférieure à la vitesse de rotation correspondant au seuil acoustique déterminé (60).

9. Système de traitement thermique (100) comprenant un circuit (1) de fluide réfrigérant (FR), mettant en oeuvre un procédé de régulation selon l'une quelconque des revendications précédentes.

10. Système de traitement thermique (100) selon la revendication précédente, comprenant un module de commande (50) configuré pour régir la mise en oeuvre du procédé de régulation.

## Patentansprüche

1. Verfahren zur Regelung eines Kreislaufs (1) eines Kältemittels (FR) für ein Kraftfahrzeug, der mindestens einen ersten Zweig (4) und einen zweiten Zweig (5) beinhaltet, wobei der erste Zweig (4) über einen ersten Wärmetauscher (10), der dazu konfiguriert ist, auf eine elektrische Speichervorrichtung (11) des Fahrzeugs thermisch einzuwirken, und über eine erste Kompressionsvorrichtung (9), die mit dem ersten Zweig (4) assoziiert ist, verfügt, wobei der zweite Zweig (5) über einen zweiten Wärmetauscher (14), der dazu konfiguriert ist, auf einen Fahrgastraum des Fahrzeugs thermisch einzuwirken, und über eine zweite Kompressionsvorrichtung (13), die mit dem zweiten Zweig (5) assoziiert ist, verfügt, wobei die Kompressionsvorrichtungen (9, 13) dazu fähig sind, mit variablen Geschwindigkeiten zu drehen, um einem variablen Kühlungsziel (71, 72) der Zweige (4, 5) zu entsprechen, **dadurch gekennzeichnet, dass** während des Verfahrens
- in einer Phase die Drehgeschwindigkeit (61, 62) mindestens einer Kompressionsvorrichtung (9, 13) bis zu einer Drehgeschwindigkeit, die einer bestimmten Lärmschwelle (60) entspricht, erhöht wird, solange das Kühlungsziel (71, 72) des Zweiges (4, 5), mit dem die Kompressionsvorrichtung (9, 13) assoziiert ist, noch nicht erreicht ist,
- in einer anderen Phase, falls das Kühlungsziel (71, 72) des Zweiges (4, 5), mit dem die Kompressionsvorrichtung (9, 13) assoziiert ist, nicht erreicht wird, wenn die Drehgeschwindigkeit (61, 62) der Kompressionsvorrichtung (9, 13) die der bestimmten Lärmschwelle (60) entsprechende Drehgeschwindigkeit erreicht, man die Drehgeschwindigkeit (61, 62) der Kompressionsvorrichtungen (9, 13) konvergieren lässt, sodass diese Geschwindigkeit innerhalb von +/- 10 % identisch ist.

2. Regelungsverfahren nach Anspruch 1, während dessen bestimmt wird, ob das Kühlungsziel (71, 72) des Zweiges (4, 5), mit dem die Kompressionsvorrichtung (9, 13) assoziiert ist, erreicht ist, indem eine Kälteleistung (73, 74) des Zweiges (4, 5) mit dem Kühlungsziel (71, 72) des Zweiges (4, 5), mit dem die Kompressionsvorrichtung (9, 13) assoziiert ist, verglichen wird.

3. Regelungsverfahren nach einem beliebigen der vorhergehenden Ansprüche, während dessen der Kreislauf (1) des Kältemittels (FR) dazu fähig ist, das Kältemittel (FR) des ersten Zweiges (4) zu dem zweiten Zweig (5) zirkulieren zu lassen, wobei der Kreislauf (1) des Kältemittels (FR) eine Leitung (15) beinhaltet, die eine Verbindung zwischen dem ersten Zweig (4) und dem zweiten Zweig (5) herstellt, wobei die Leitung (15) über ein Steuermittel (16) verfügt, das dazu fähig ist, einen Durchgang des Kältemittels (FR) von einem Zweig (4, 5) zum anderen zu regeln.

4. Regelungsverfahren nach Anspruch 3, während dessen das Steuermittel (16) eine Zirkulation des Kältemittels (FR) in der Leitung (15) gestattet, wenn die erste Kompressionsvorrichtung (9) die der bestimmten Lärmschwelle (60) entsprechende Drehgeschwindigkeit erreicht, ohne einem ersten Kühlungsziel (71) des ersten Zweiges (4) entsprochen zu haben, und die zweite Kompressionsvorrichtung (13) inaktiv ist oder mit einer Geschwindigkeit dreht, die kleiner als die der bestimmten Lärmschwelle (60) entsprechende Drehgeschwindigkeit ist.

5. Regelungsverfahren nach Anspruch 4, während dessen die erste Kompressionsvorrichtung (9) und die zweite Kompressionsvorrichtung (13) auf eine Drehgeschwindigkeit (61, 62) hin konvergieren, die kleiner als die der bestimmten Lärmschwelle (60) entsprechende Drehgeschwindigkeit ist, wobei eine erste Drehgeschwindigkeit (61) der ersten Kompressionsvorrichtung (9) reduziert wird, während eine zweite Drehgeschwindigkeit (62) der zweiten Kompressionsvorrichtung (13) erhöht wird.

6. Regelungsverfahren nach einem der Ansprüche 4 oder 5, während dessen die jeweilige Drehgeschwindigkeit (61, 62) jeder Kompressionsvorrichtung (9, 13) nach dem Konvergieren der Drehgeschwindigkeiten (61, 62) auf koordinierte Weise im Verhältnis zu der jeweils anderen bis zu der der bestimmten Lärmschwelle (60) entsprechenden Drehgeschwindigkeit erhöht wird, solange das erste Kühlungsziel (71) des ersten Zweiges (4) nicht erreicht ist.

7. Regelungsverfahren nach Anspruch 4, während dessen das Steuermittel (16) die Zirkulation des Kältemittels (FR) innerhalb der Leitung (15) gemäß einem variablen Öffnungsquerschnitt regelt.

8. Regelungsverfahren nach Anspruch 7, wobei der Öffnungsquerschnitt des Steuermittels (16) zunimmt, wenn die erste Kompressionsvorrichtung (9) die der bestimmten Lärmschwelle (60) entsprechende Drehgeschwindigkeit erreicht, ohne dem ersten Kühlungsziel (71) des ersten Zweiges (4) entsprochen zu haben, und solange die zweite Kompressionsvorrichtung (13) mit einer Geschwindigkeit dreht, die kleiner als die der bestimmten Lärmschwelle (60) entsprechende Drehgeschwindigkeit ist.

9. System zum thermischen Einwirken (100), das einen Kreislauf (1) eines Kältemittels (FR) beinhaltet, der ein Regelungsverfahren nach einem beliebigen der vorhergehenden Ansprüche umsetzt.

10. System zum thermischen Einwirken (100) nach dem vorhergehenden Anspruch, das ein Steuermodul (50) beinhaltet, das dazu konfiguriert ist, die Umsetzung des Regelungsverfahrens durchzuführen.

## Claims

1. Method for regulating a motor vehicle refrigerant (FR) circuit (1) comprising at least a first leg (4) and a second leg (5), the first leg (4) being provided with a first heat exchanger (10) configured to thermally condition an electrical storage device (11) of the vehicle and with a first compression device (9) associated with the first leg (4), the second leg (5) being provided with a second heat exchanger (14) configured to thermally treat an interior of the vehicle and with a second compression device (13) associated with the second leg (5), said compression devices (9, 13) being able to rotate at variable speeds in order to meet a variable objective for the cooling (71, 72) of the legs (4, 5), **characterized in that**, during the course of said method:
- in one step, the rotational speed (61, 62) of at least one compression device (9, 13) is increased up to a rotational speed corresponding to a determined acoustic threshold (60) as long as the cooling objective (71, 72) for the leg (4, 5) with which the compression device (9, 13) is associated has not been reached,
- in another step, if the cooling objective (71, 72) for the leg (4, 5) with which the compression device (9, 13) is associated is not reached when the rotational speed (61, 62) of the compression device (9, 13) reaches the rotational speed corresponding to the determined acoustic threshold (60), the rotational speeds (61, 62) of the compression devices (9, 13) are made to converge until these speeds are identical to within +/-10%.

2. Regulating method according to Claim 1, during which it is determined whether the cooling objective (71, 72) for the leg (4, 5) with which the compression device (9, 13) is associated is reached by comparing a refrigeration capacity (73, 74) of the leg (4, 5) with said cooling objective (71, 72) for the leg (4, 5) with which the compression device (9, 13) is associated.

3. Regulating method according to either one of the preceding claims, during which the refrigerant (FR) circuit (1) is able to cause the refrigerant (FR) to circulate from the first leg (4) to the second leg (5), the refrigerant (FR) circuit (1) comprising a pipe (15) providing a connection between the first leg (4) and the second leg (5), said pipe (15) being provided with a control means (16) able to regulate the passage of the refrigerant (FR) from one leg (4, 5) to the other.

4. Regulating method according to Claim 3, during which the control means (16) allows the refrigerant (FR) to circulate in the pipe (15) when the first compression device (9) reaches the rotational speed corresponding to the determined acoustic threshold (60) without having met a first cooling objective (71) for the first leg (4), and also the second compression device (13) is inactive or is rotating at a speed below the rotational speed corresponding to the determined acoustic threshold (60).

5. Regulating method according to Claim 4, during which the first compression device (9) and the second compression device (13) converge on a rotational speed (61, 62) lower than the rotational speed corresponding to the determined acoustic threshold (60), a first rotational speed (61) of the first compression device (9) being reduced while a second rotational speed (62) of the second compression device (13) is increased.

6. Regulating method according to one of Claims 4 and 5, during which the respective rotational speed (61, 62) of each compression device (9, 13) after the rotational speeds (61, 62) have converged is increased the one in coordination with the other up to the rotational speed corresponding to the determined acoustic threshold (60) as long as the first cooling objective (71) for the first leg (4) is not reached.

7. Regulating method according to Claim 4, during which the control means (16) regulates the circulation of the refrigerant (FR) within the pipe (15) according to a variable opening cross section.

8. Regulating method according to Claim 7, wherein the opening cross section of the control means (16) increases when the first compression device (9) reaches the rotational speed corresponding to the determined acoustic threshold (60) without having met the first cooling objective (71) for the first leg (4), and as long as the second compression device (13) is rotating at a speed below the rotational speed corresponding to the determined acoustic threshold (60).

9. Thermal management system (100) comprising a refrigerant (FR) circuit (1) implementing a regulating method according to any one of the preceding claims.

10. Thermal management system (100) according to the preceding claim, comprising a control module (50) configured to govern the implementation of the regulating method.
